# EUROPÄISCHE PATENTSCHRIFT

(11) **EP 2 468 600 B1**
(45) Veröffentlichungstag und Bekanntmachung des Hinweises auf die Patenterteilung: **31.10.2012**
(21) Anmeldenummer: 10016082.9
(22) Anmeldetag: 24.12.2010
(51) Int. Cl.: B61D 17/22, B60D 5/00, B64F 1/305

(54) **Balganordnung eines Übergangs zwischen zwei gelenkig miteinander verbundenen Fahrzeugen oder Balganordnung einer Fluggastbrücke oder Fluggasttreppe**
Bellows assembly for the intersection of two vehicles with a jointed connection or bellows assembly for an air passenger boarding bridge or steps
Agencement de traverse d'un passage entre deux véhicules reliés de manière articulée ou agencement de traverse d'une passerelle ou escalier d'embarquement

(43) Veröffentlichungstag der Anmeldung: 27.06.2012
(73) Patentinhaber: Hübner GmbH, 34123 Kassel (DE)
(72) Erfinder: Goebels, André, 34134 Kassel (DE)
(74) Vertreter: Walther, Walther & Hinz GbR

(56) Entgegenhaltungen:
- EP-A1- 2 149 461
- EP-A2- 2 236 381
- AT-U1- 10 683
- DE-A1- 4 231 323

## Beschreibung

Die Erfindung betrifft eine Balganordnung eines Übergangs zwischen zwei gelenkig miteinander verbundenen Fahrzeugen oder die Balganordnung einer Fluggastbrücke oder Fluggasttreppe, wobei die Balganordnung einen inneren Balg und einen den inneren Balg beabstandet umgebenden äußeren Balg umfasst.

Eine Balganordnung mit dem im Oberbegriff von Anspruch 1 definierten Merkmalen ist aus der EP-A-2 236 381 bekannt.

Balganordnungen mit einem inneren und einem äußeren Balg sind insbesondere in der Form zweier ineinander beabstandet gelagerter Wellenbälge aus dem Schienenverkehr und hier, insbesondere aus dem Hochgeschwindigkeitsschienenverkehr hinreichend bekannt. Derartige auch als Doppelwellenbälge bezeichnete Balganordungen dienen einerseits der erhöhten Geräuschdämmung, aber auch der zusätzlichen Isolierung. Der Zwischenraum zwischen dem inneren Balg und dem äußeren Balg wird allerdings auch dazu genutzt, um Leitungen zwischen den gelenkig miteinander verbundenen Fahrzeugteilen oder Fahrzeugen zu führen. In diesem Zusammenhang ist nicht nur bekannt, Elektro- oder Hydraulikleitungen zu verlegen, sondern es ist auch bekannt in diesem Zwischenraum Leitungen zur Luftführung zu verlegen. Hierbei sind in dem Zwischenraum zwischen den beiden Bälgen in gleicher Ausbildung wie der Balg als solcher, auch balgartige Rohre oder Kanäle vorgesehen, die z. B. die von der Klimaanlage klimatisierte Luft zwischen den Fahrzeugen verteilen. Das heißt, es befinden sich ein oder mehrere solcher Kanäle in dem Zwischenraum zwischen dem äußeren und dem inneren Balg.

Die Herstellung solcher balgähnlicher Kanäle ist mit verhältnismäßig großen Kosten verbunden.

Die der Erfindung zugrunde liegende Aufgabe besteht demzufolge darin, eine preiswertere Lösung für die Luftführung zwischen zwei Fahrzeugen bereitzustellen.

Zur Lösung der Aufgabe wird erfindungsgemäß vorgeschlagen, dass zwischen dem inneren und dem äußeren Balg im Seitenwand- und/oder im Deckenbereich zur Bildung mindestens eines kanalartigen Durchlasses mindestens zwei parallel zur Längsachse verlaufende Wandelemente vorgesehen sind, wobei die Wandelemente im Übergang sowohl zum äußeren als auch zum inneren Balg im Wesentlichen konturgleich zu dem jeweiligen Balg verlaufen. Hieraus wird deutlich, dass der Kanal zur Luftführung zwischen den beiden Fahrzeugen auf zwei einander gegenüber liegenden Seiten durch den inneren und den äußeren Balg gebildet wird und die zwischen dem äußeren und dem inneren Balg eingesetzten mindestens zwei Wandelemente. Gegenstand der Lehre des Anspruches 1 ist darüber hinaus, dass die Wandelemente im Übergang sowohl zum äußeren als auch zum inneren Balg im Wesentlichen konturgleich zu dem jeweiligen Balg verlaufen. Das heißt, dass die Wandelemente die Kontur der Oberseite des jeweiligen Balges nachbilden, und so in einer Art Formschluss die Wandelemente mit ihren oberen und unteren Stirnseiten in die Kontur des inneren und des äußeren Balges eingreifen. Hierdurch wird erreicht, dass der Übergang von dem Wandelemente zu dem jeweiligen Balg im Wesentlichen luftdicht abgeschlossen werden kann, beispielsweise dadurch, dass das Wandelement in diesem Bereich mit dem Balg verklebt ist oder auch dadurch, dass das Wandelelement beispielsweise über einen Klettbandverschluss mit dem jeweiligen Balg in Verbindung steht.

Vorteilhafte Merkmale und Ausgestaltungen zu der Erfindung ergeben sich aus den Unteransprüchen.

So ist beispielsweise vorgesehen, dass sowohl der innere, als auch der äußere Balg als Falten- und/oder Wellenbalg ausgebildet sind. Hierdurch sind Varianten erfasst, bei denen sowohl der innere Balg als auch der äußere Balg gleich ausgebildet sind, also beispielsweise entweder als Wellenbalg oder als Faltenbalg, es sind allerdings auch Kombinationen möglich.

In Bezug auf die Ausbildung der Wandelemente, insbesondere auch in Bezug auf die Befestigung ist vorgesehen, dass die Wandelemente an dem oder den Rahmen des inneren oder des äußeren Balges befestigt sind. Hierzu ist im Einzelnen vorgesehen, dass das Wandelement ein Arm aufweist, der am Balgrahmen oder ggf. am Kuppelrahmen des Balges befestigt ist. Das Wandelement ist zur konturgleichen Aufnahme durch den jeweiligen Balg ebenfalls wellen- oder faltenförmig ausgebildet. Hieraus folgt auch, dass das Wandelement aus dem gleichen Material hergestellt ist, wie der Balg selbst, also aus beispielsweise einem Gewebe als Festigkeitsträger, der mit einem Kunststoff beschichtet ist, beispielsweise einem Silikon.

Nach einem weiteren Merkmal der Erfindung ist der innere Balg im Querschnitt U-förmig ausgebildet; d. h., dass der innere Balg die Übergangsbrücke als Teil des Übergangs U-förmig umgibt. Demgegenüber ist der äußere Balg kastenförmig umlaufend ausgebildet, was bedeutet, dass der äußere Balg nicht nur die Brücke, sondern üblicherweise auch das Gelenk oder die Kupplung zwischen den beiden Fahrzeugen umgibt.

Anhand der Zeichnungen wird die Erfindung nachstehend beispielhaft näher erläutert.
- Fig. 1: zeigt zwei Fahrzeuge, die durch einen Balg verbunden sind;
- Fig. 2: zeigt den Balg in einer perspektivischen Ansicht;

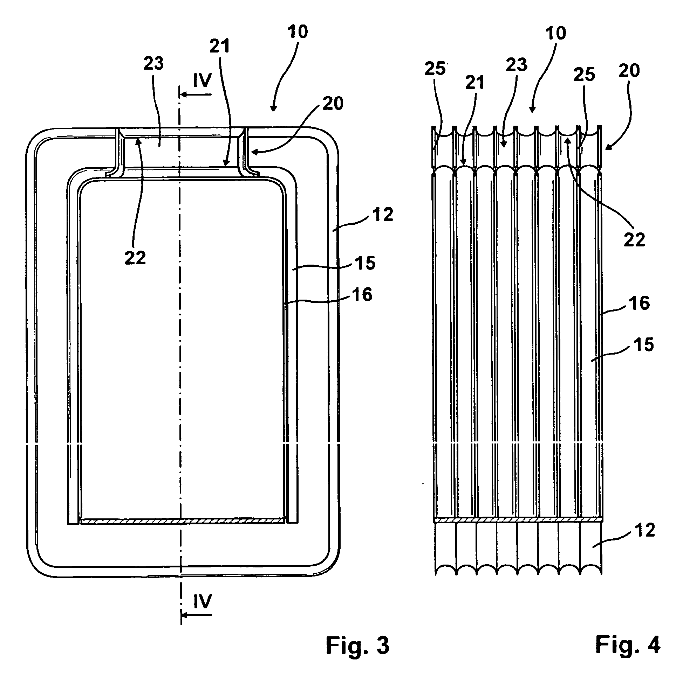

- Fig. 3: zeigt eine Frontansicht gemäß Fig. 2;
- Fig. 4: zeigt einen Schnitt gemäß der Linie IV-IV aus Fig. 3

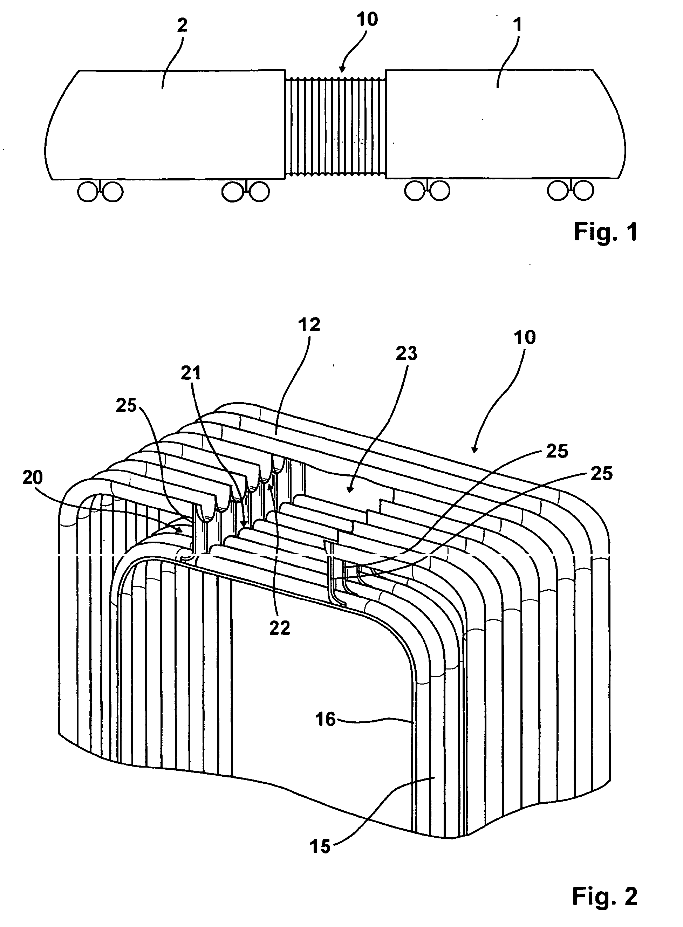

Gemäß Fig. 1 ist die die beiden Fahrzeuge 1 und 2 verbindende Balganordnung mit 10 bezeichnet. Die Balganordnung 10 umfasst den äußeren Balg 12 sowie beabstandet dazu den inneren Balg 15. Der äußere Balg 12 ist als Wellenbalg ausgebildet, dessen Wellen mit ihrem Scheitel in Richtung auf den inneren Balg zugerichtet sind, wie sich dies unmittelbar in Anschauung von Fig. 2 ergibt. Der innere Balg 15 ist ebenfalls als Wellenbalg ausgebildet, dessen Wellen mit ihrem Scheitel jedoch nach außen auf den äußeren Balg zugerichtet sind. Zwischen dem inneren Balg 15 und dem äußeren Balg 12 befinden sich die mit 20 bezeichneten beiden Wandelemente. Das Wandelement 20 ist ebenfalls balgartig ausgebildet, und folgt auf seiner unteren Stirnseite 21 und auf seiner oberen Stirnseite 22 der Kontur des inneren Balges 15 und des äußeren Balges 12. Im Übergang zu dem inneren und dem äußeren Balg ist das Wandelement mit dem jeweiligen Balg verklebt, oder beispielsweise mittels Klettbandverschluss verbunden. Durch die Wandelemente und die beiden Bälge wird schließlich der kanalartige Durchfluss 23 gebildet, durch den die Luftversorgung zwischen den beiden Fahrzeugen erfolgt.

Zur Erzielung einer gewissen Stabilität weist das Wandelement 20 ein oder mehrere Arme 25 auf, wobei die Arme 25 das Wandelement über die Höhe erfassen, und zwar im Wellental. Der Arm 25 ist endseitig mit dem Balgrahmen 16 des inneren Balges 15 verbunden. Die Verbindung kann über die Länge des Balgelementes mehrfach durch jeweils einen Arm 25 vorgenommen werden. Üblicherweise reicht es jedoch aus, wenn derartige Arme 25 am vorderen und am hinteren Ende des Wandelementes 20 vorgesehen sind. Dies auch deshalb, weil das Wandelement anderweitig z. B. durch Verkleben oder den bereits geschriebenen Klettbandverschluss mit dem jeweiligen Balg in Verbindung steht.

### Bezugszeichenliste:

- 1: Fahrzeug
- 2: Fahrzeug
- 10: Balganordnung
- 12: äußerer Balg
- 15: innerer Balg
- 16: Balgrahmen
- 20: Wandelement
- 21: untere Stirnseite
- 22: obere Stirnseite
- 23: kanalartiger Durchfluss
- 25: Arm

## Patentansprüche

1. Balganordnung (10) eines Übergangs zwischen zwei gelenkig miteinander verbundenen Fahrzeugen (1, 2) oder Balganordnung (10) einer Fluggasttreppe oder Fluggastbrücke, wobei die Balganordnung (10) einen inneren Balg (15) und einen den inneren Balg (15) beabstandet umgebenden äußeren Balg (12) umfasst,
**dadurch gekennzeichnet,**
**dass** zwischen dem inneren (15) und dem äußeren Balg (12) im Seitenwand und/oder im Deckenbereich zur Bildung eines kanalartigen Durchlasses (23) mindestens zwei parallel zur Längsachse verlaufende Wandelemente (20) vorgesehen sind, wobei die Wandelemente (20) im Übergang sowohl zum äußeren (12) als auch zum inneren Balg (15) im Wesentlichen konturgleich zu dem jeweiligen Balg verlaufen.

2. Balganordnung (10) nach Anspruch 1,
**dadurch gekennzeichnet,**
**dass** sowohl der innere (15) als auch der äußere Balg (12) als Falten- und/oder Wellenbalg ausgebildet sind.

3. Balganordnung (10) nach einem der voranstehenden Ansprüche,
**dadurch gekennzeichnet,**
**dass** der innere Balg (15) im Querschnitt U-förmig ausgebildet ist.

4. Balganordnung (10) nach einem der voranstehenden Ansprüche,
**dadurch gekennzeichnet,**
**dass** der äußere Balg (12) kastenförmig umlaufend ausgebildet ist.

5. Balganordnung (10) nach einem der voranstehenden Ansprüche,
**dadurch gekennzeichnet,**
**dass** die Wandelemente (20) am Rahmen (16) des inneren (15) und/oder des äußeren Balges (12) befestigt sind.

6. Balganordnung (10) nach einem der voranstehenden Ansprüche,
**dadurch gekennzeichnet,**
**dass** zur Befestigung des Wandelementes (20) am Balg (15) mindestens ein Arm (25) vorgesehen ist, der am Balgrahmen (16) befestigt ist.

7. Balganordnung (10) nach einem der voranstehenden Ansprüche,
**dadurch gekennzeichnet,**
**dass** das Wandelement (20) wellen- oder faltenförmig ausgebildet ist.

8. Balganordnung (10) nach einem der voranstehenden Ansprüche,
**dadurch gekennzeichnet,**
**dass** das Wandelement (20) mit zumindest einem Balg (12, 15) verklebt ist.

9. Balganordnung (10) nach einem der voranstehenden Ansprüche,
**dadurch gekennzeichnet,**
**dass** das Wandelement (20) mit zumindest einem Balg (12, 15) durch einen Klettverschluss verbunden ist.

## Claims

1. A bellows assembly (10) of a transfer between two pivotably connected vehicles (1, 2) or a bellows assembly (10) of a gangway or passenger boarding bridge, wherein the bellows assembly (10) comprises an interior bellows (15) and an exterior bellows (12) surrounding the interior bellows (15) in a spaced manner,
**characterised in**
**that** between the interior bellows (15) and the exterior bellows (12) at least two wall elements (20) extending in parallel to the longitudinal axis are provided in the side wall area and/or in the ceiling area for forming a duct-like passage (23), wherein the wall elements (20) in the transfer not only relative to the exterior bellows (12) but also to the interior bellows (15) extend substantially with identical contour relative to the respective bellows.

2. The bellows assembly (10) according to claim 1,
**characterised in**
**that** not only the interior bellows (15) but also the exterior bellows (12) are formed as a folding bellows and/or as a corrugation bellows.

3. The bellows assembly (10) according to any one of the preceding claims,
**characterised in**
**that** the interior bellows (15) is U-shaped in cross-section.

4. The bellows assembly (10) according to any one of the preceding claims,
**characterised in**
**that** the exterior bellows (12) is circumferential in a box-shaped manner.

5. The bellows assembly (10) according to any one of the preceding claims,
**characterised in**
**that** the wall elements (20) are fixed on the frame (16) of the interior bellows (15) and/or the exterior bellows (12).

6. The bellows assembly (10) according to any one of the preceding claims,
**characterised in**
**that** for fixing the wall element (20) on the bellows (15) at least one arm (25) is provided which is fixed on the bellows frame (16).

7. The bellows assembly (10) according to any one of the preceding claims,
**characterised in**
**that** the wall element (20) is configured in the form of corrugations or folds.

8. The bellows assembly (10) according to any one of the preceding claims,
**characterised in**
**that** the wall element (20) is bonded with at least one bellows (12, 15).

9. The bellows assembly (10) according to any one of the preceding claims,
**characterised in**
**that** the wall element (20) is connected with at least one bellows (12, 15) by means of a hook and loop fastener.

## Revendications

1. Dispositif à soufflet (10) pour un passage d'intercommunication entre deux véhicules articulés (1, 2) couplés entre eux, ou dispositif à soufflet (10) d'un escalier d'accès passagers à un avion ou d'un pont d'accès passagers à un avion, dans lequel le dispositif à soufflet (10) comporte un soufflet intérieur (15) et un soufflet extérieur (12) entourant le soufflet intérieur (15) avec un espacement entre eux,
**caractérisé en ce qu'il**
comporte au moins deux éléments de paroi (20) parallèles entre elles, disposées longitudinalement entre le soufflet intérieur (15) et le soufflet extérieur (12) dans le secteur de la paroi latérale ou dans le secteur du plafond, qui constituent un passage (23) en forme de canal, dans lequel les éléments de paroi (20) présentent au niveau de la jonction avec le soufflet extérieur (12) et avec le soufflet intérieur (15), des contours identiques au profil du soufflet correspondant.

2. Dispositif à soufflet (10) selon la revendication 1,
**caractérisé en ce que**
le soufflet intérieur (15) ainsi que le soufflet extérieur (12) sont conformés en soufflets à plis ou soufflets à vagues.

3. Dispositif à soufflet (10) selon l'une quelconque des revendications précédentes,
**caractérisé en ce que**
le soufflet intérieur (15) présente dans sa coupe transversale un profil en forme de U.

4. Dispositif à soufflet (10) selon l'une quelconque des revendications précédentes,
**caractérisé en ce que**
le soufflet extérieur (12) a une forme de caisson.

5. Dispositif à soufflet (10) selon l'une quelconque des revendications précédentes,
**caractérisé en ce que**
les éléments de paroi (20) sont fixés au cadre (16) du soufflet intérieur (15) et/ou du soufflet extérieur (12).

6. Dispositif à soufflet (10) selon l'une quelconque des revendications précédentes,
**caractérisé en ce qu'il**
comporte au moins un bras (25) fixé au cadre de soufflet (16) pour la fixation de l'élément de paroi (20) au soufflet (15).

7. Dispositif à soufflet (10) selon l'une quelconque des revendications précédentes,
**caractérisé en ce que**
l'élément de paroi (20) est configuré avec des plis ou des vagues.

8. Dispositif à soufflet (10) selon l'une quelconque des revendications précédentes,
**caractérisé en ce que**
l'élément de paroi (20) est fixé à au moins un des soufflets (12, 15) par collage.

9. Dispositif à soufflet (10) selon l'une quelconque des revendications précédentes,
**caractérisé en ce que**
l'élément de paroi (20) est fixé à au moins un des soufflets (12, 15) au moyen d'une fermeture Velcro.
